# EUROPÄISCHE PATENTSCHRIFT

(11) **EP 1 795 489 B1**
(45) Veröffentlichungstag und Bekanntmachung des Hinweises auf die Patenterteilung: **22.09.2010**
(21) Anmeldenummer: 06125373.8
(22) Anmeldetag: 05.12.2006
(51) Int. Cl.: B66B 31/00

(54) **Hubsystem.**
Lifting system.
Système de levage.

(30) Priorität: 07.12.2005 EP 05111810; 13.04.2006 EP 06112650
(43) Veröffentlichungstag der Anmeldung: 13.06.2007
(73) Patentinhaber: Inventio AG, 6052 Hergiswil (CH)
(72) Erfinder: Klein, Wolfgang, 7100, Neusiedl/See (AT); Hein, Andreas, 1230, Wien (AT); Matheisl, Michael, 1020, Wien (AT)

(56) Entgegenhaltungen:
- DE-A1- 10 041 578
- GB-A- 2 352 692
- JP-A- 7 315 740
- JP-A- 11 199 165
- US-A- 3 137 512

## Beschreibung

Die Erfindung betrifft ein Hubsystem für eine Vertikaljustierung einer Fahrsystemstruktur und eine Verwendung des Hubsystems zum Montieren und/oder Fertigungsmontieren von Fahrsystemen. Fertigungsmontage ist definiert als Zusammenbau von diversen Einzelteilen und Baugruppen einer Fahrtreppe bzw. eines Fahrsteiges.

Hubsysteme im Sinne der Erfindung werden benutzt, um Fahrsystemstrukturen in Montagestationen niveaumässig auszurichten. Unter dem Begriff einer Fahrsystemstruktur soll ein Fahrsystem, das heisst eine Fahrtreppe oder ein Fahrsteig, in unfertigem Zustand während seiner werkseitigen Fertigungsmontage bzw. komplett Montage verstanden werden, wobei es sich zum Beispiel um einen Rahmen oder ein Fachwerk handeln kann, das während der Fertigungsmontage mit weiteren Elementen und Baugruppen bzw. Fertigungsteilen bestückt wird.

Bei der Fertigungsmontage kann es von Bedeutung sein, dass die Fahrsystemstruktur genau horizontiert bzw. genauestens in der Waage ist.

Ein Hubsystem, das bei der Fertigungsmontage von Fahrsystemstrukturen für eine Höhenjustierung verwendbar ist, kann zum Beispiel so ausgebildet sein, dass es mehrere Füsse aufweist, von denen jeder in einer Fussaufnahmen aufgenommen ist. Jeder Fuss stützt sich auf eine tragende Fläche auf. Um eine Höhenjustierung vorzunehmen, wird die tragende Fläche angehoben oder abgesenkt.

Die hierbei hauptsächlich auftretenden Probleme sind die Folgenden:
Erstens muss das Hubsystem eine möglichst perfekte Horizontrierung bzw. Höhenjustierung im Bereich von einigen Millimetern oder Zentimetern gewährleisten.
Zweitens sind die Fahrsystemstrukturen sperrig und schwer, so dass an das Hubsystem hohe mechanische Anforderungen gestellt werden müssen.
Drittens sollten die Hubsysteme rasch beschickbar und rasch und einfach zu bedienen sein. Die werkseitige Fertigungsmontage von Fahrsystemen kann nämlich stark rationalisiert werden, wenn sie in einer Fertigungsstrasse erfolgt. Eine solche Fertigungsstrasse umfasst mehrere Montagestationen, die von den Fahrsystemstrukturen nacheinander durchlaufen werden und gleichzeitig beschickt werden. In jeder Montagestation werden während einer Montagephase stationsspezifische Montageschritte durchgeführt. Nach Beendigung der möglichst synchron durchgeführten Montagephase werden die Fahrsystemstrukturen während einer Transportphase zur jeweils folgenden Montagestation gebracht, wobei unter optimalen Fabrikationsbedingungen auch der Transport aller Fahrsystemstrukturen möglichst synchron vor sich gehen sollte. Es ist offensichtlich, dass eine rasche Beschickung und Bedienung der Hubsysteme die Manipulationszeiten stark verkürzt.
Viertens sollen die Hubsysteme preisgünstig sein, da eine Vielzahl von ihnen, nämlich mehrere Hubsysteme für jede Montagestation, benötigt werden.

Zwar ist aus der US-3,724,015 eine einstellbare Treppe in der Art einer Gangway zur Benutzung auf Flughäfen bekannt. Hierbei handelt es sich aber nicht um eine Treppe in Fertigungsmontage, und ausserdem sind die geforderten Genauigkeiten bedeutend geringer als es bei der Fertigungsmontage von Fahrsystemen erforderlich ist.

Die gattungsbildende JP 07315740 betrifft eine Einrichtung mit zwei Hebezeugen für die Demontage eines Schrägaufzugs oder einer Rolltreppe, die einen Fachwerkträger aufweist, der in mehrere Teile unterteilbar ist. Dabei sind die Hebezeuge am unteren und oberen Ende des Aufzugs angeordnet. Unter den obersten zu demontierenden Teil des Fachwerkträgers werden mit Wälzkörpern versehene Hubsysteme geschoben. Diese weisen jeweils eine vertikal verschiebbare Tragfläche auf, die an den zu demontierenden Teil des Fachwerkträgers angelegt wird und mit der dieser angehoben wird. Danach wird dieser Teil des Fachwerkträgers nach oben gezogen. Anschließend wird eine Platte auf die obere Stirnkante des restlichen Fachwerkträgers gelegt und an dem schräg verlaufenden Teil des Unterbaus des Aufzugs abgestützt und der nach oben gezogene Teil des Fachwerkträgers über die Platte und die Oberseite des restlichen Fachwerkträgers nach unten gleiten gelassen. Dabei wird der Trägerteil vom oberen und unteren Hebezeug mittels Seilen geführt.

Ein Hubsystem, mit welchem die weiter oben erwähnten Probleme gelöst werden können, ist nicht bekannt.

Die Aufgabe der Erfindung wird somit darin gesehen,
- ein Hubsystem zu schaffen, das sich für den Einsatz bei der Fertigungsmontage von Fahrsystemstrukturen eignet
- eine Verwendung zur Durchführung einer derartigen Fertigungsmontage vorzuschlagen.

Die Lösung dieser Aufgabe erfolgt erfindungsgemäss
- für das Hubsystem durch die Merkmale des Patentanspruchs 1,
- für die Verwendung durch die Merkmale des Patentanspruchs 10.

Vorteilhafte Weiterbildungen des erfindungsgemässen Hubsystems sind durch die abhängigen Patentansprüche definiert.

Das neue Hubsystem umfasst einen Fuss, der mindestens während der Zusammenbauphase starr am Fahrsystem angebracht ist und während der Fertigungsmontage nach unten weist, sowie eine Fussaufnahme, in welcher der Fuss aufnehmbar bzw. in den Montagestationen aufgenommen ist. Der Fuss kann zylindrisch, rund, kugelig, ballig oder prismatisch stein. Dieser Fuss kann beilspielsweise an gegenüberliegenden Seiten durch zwei Fussflächen begrenzt werden, die unter einem Fussflächenwinkel zueinander angeordnet sind. Der Fuss kann also in einem Vertikalschnitt prismatisch sein. Die Fussaufnahme weist in diesem Fall zwei Tragflächen auf, an denen die Fussflächen anliegen. Diese Tragflächen sind komplementär zu den Fussflächen, nämlich ebenfalls prismatisch, ausgebildet und angeordnet. Die Tragflächen sind vertikal verschiebbar. Bei der Verschiebung der Tragflächen ändert der Fuss seine absolute Höhenlage, wodurch die Vertikaljustierung erfolgt.

Um bei der Höhenjustierung eine seitliche Verschiebung einer vertikalen Fussachse zu vermeiden, ist vorgesehen, dass die beiden Tragflächen der Fussaufnahme spiegelsymmetrisch zu einer Vertikalmittelebene angeordnet und vorzugsweise relativ zu dieser Vertikalmittelebene horizontal verschiebbar sind.

Bei einer vorteilhaften Ausbildung des Hubsystems bildet die Tragfläche eine obere Begrenzungsfläche eines Keilelementes. Dieses Keilelement besitzt eine untere Begrenzungsfläche, mit der es auf einer Gleitfläche eines Grundkörpers verschiebbar abgestützt ist.

Die untere Begrenzungsfläche des Keilkörpers steht vorteilhaft unter einem Keilwinkel zu einer Horizontalebene, so dass die obere Begrenzungsfläche und die untere Begrenzungsfläche des Keilkörpers spiegelsymmetrisch zu einer Horizontalebene gerichtet sind.

Zur Verschiebung der Tragflächen bzw. der Keilkörper kann das Hubsystem eine mechanische Anordnung, insbesondere eine Schraubenanordnung aufweisen.

Die Schraubenanordnung kann zum Beispiel eine Zentralschraube aufweisen, und diese kann mittels eines Gabel-, Ring- oder Steckschlüssels oder eines elektrisch oder hydraulisch oder per Pressluft betätigbaren Schlüssels betätigbar sein bzw. betrieben werden.

Im Weiteren kann das Hubsystem eine Federanordnung aufweisen, um die Tragflächen der Fussaufnahme auf den Fuss vorzuspannen und die Betätigung des Hubsystems zu erleichtern.

Um den Fuss sicher in der Fussaufnahme zu halten, kann die Fussaufnahme zwei einander gegenüberliegende vertikale Seitenplatten besitzt, die zusammen mit den Tragflächen einen Raum für den Fuss begrenzen.

Das Hubsystem weist üblicherweise weitere Füsse und Fussaufnahmen, insgesamt zum Beispiel drei oder vier Füsse und Fussaufnahmen auf.

Weitere Einzelheiten und Vorteile der Erfindung werden im Folgenden an Hand eines Beispieles und mit Bezug auf die Zeichnungen beschrieben. Es zeigen:
- Fig. 1A: ein Zwischenprodukt, umfassend ein stationäres Hubsystem mit einem Bereich einer auf ihm abgestützten Fahrtreppe, von der Seite;
- Fig. 1B: den in Fig. 1A eingekreisten Bereich, in gegenüber Fig. 1A vergrösserter Darstellung;
- Fig. 2A: einen Fahrsystemaufnehmer mit zwei Hubsystemen, von denen nur eines sichtbar ist, wobei das Hubsystem auf einer mobilen Aufnahmeeinheit des Fahrsystemaufnehmers angeordnet ist, von der Seite;
- Fig. 2B: die in Fig. 2A dargestellten, auf der Aufnahmeeinheit des Fahrsystemaufnehmers angebrachten Hubsysteme, von vorne;
- Fig. 3A: ein Hubsystem nach der Erfindung in einer oberen Lage, von vorne;
- Fig. 3B: das in Fig. 3A gezeigte Hubsystem in der oberen Lage, von der Seite;
- Fig. 3C: das in den Fig. 3A und 3B gezeigte Hubsystem in einer unteren Lage, von der Seite;
- Fig. 3D: das in den Fig. 3A bis 3C gezeigte Hubsystem in der unteren Lage, von vorne;
- Fig. 4A: ein Zwischenprodukt nach der Erfindung;
- Fig. 4B: den in Fig. 4A eingekreisten Bereich in gegenüber Fig. 4A vergrösserter Darstellung; und
- Fig. 5: einen Montagestandort nach der Erfindung.

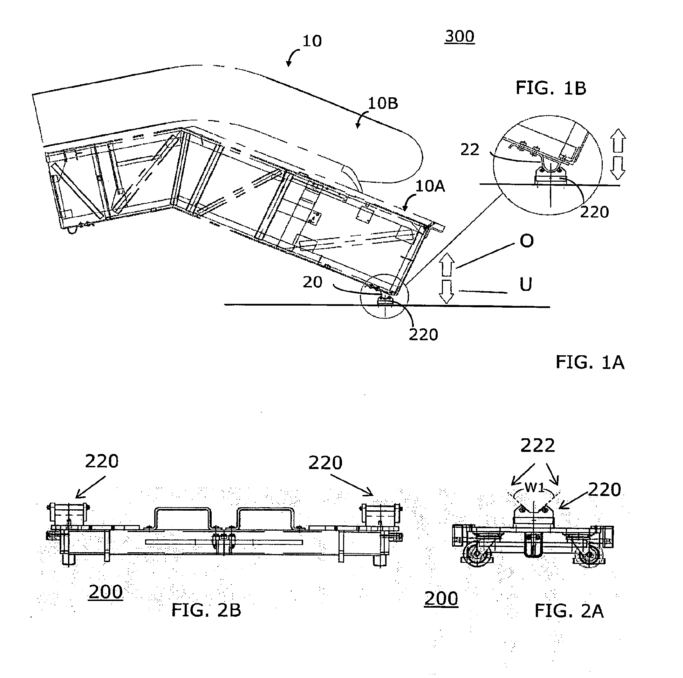

Fig. 1 (A+B) zeigt eine Fahrsystemstruktur 10, nämlich ein Fachwerk 10A einer noch unfertigen Fahrtreppe mit einer Balustrade 10B. Die Fahrsystemstruktur 10 besitzt einen nach unten weisenden Fuss bzw. Transportfuss 20, der in einer Fussaufnahme 220 aufgenommen ist. Der Fuss 20 und die Fussaufnahme 220 bilden im Wesentlichen ein Hubsystem 20/220 nach der Erfindung. Der Fuss 20 und damit der an ihn grenzende Bereich der Fahrsystemstruktur 10 können in Richtung der Pfeile 0 und U relativ zur Fussaufnahme 220 aufwärts und abwärts bewegt werden.

Während das in Fig. 1 (A+B) gezeigte Hubsystem 20/220 stationär ist und sich beispielsweise an einer nicht genau dargestellten Montagestation 410 eines Montagestandortes 400 befinden kann, zeigen die Fig. 2A und Fig. 2B zwei im Wesentlichen gleiche Hubsysteme 20/220, die als Paar, in Fig. 2B links und rechts, auf einer mobilen Aufnahmeeinheit einer Fahrsystemtransporteinrichtung bzw. eines Fahrsystemaufnehmers 200 angeordnet sind.

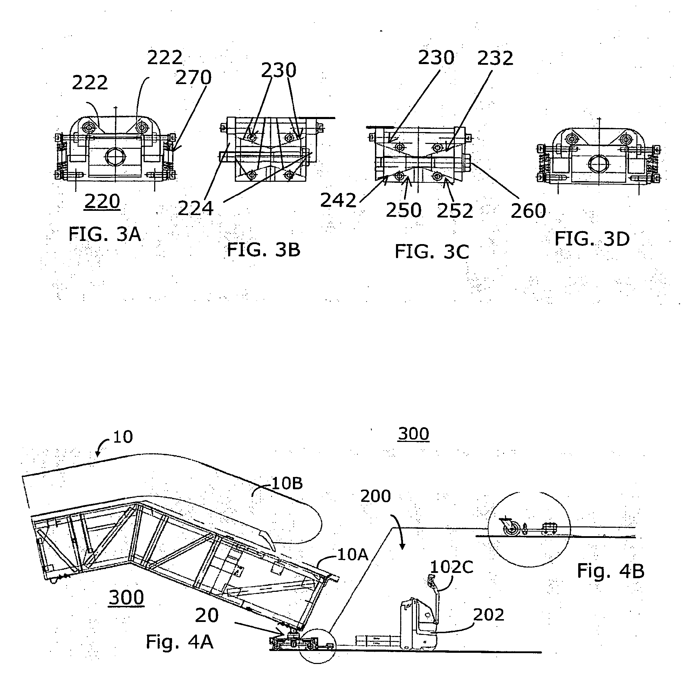

Der nur in Fig. 1 (A+B) gezeigte Fuss 20 ist keilförmig oder rund ausgebildet und weist zwei sich gegenüberliegende, nach unten zulaufende Fussflächen 22 auf, die zusammen einen Fusswinkel W1 einschliessen. Diese zulaufenden Fussflächen 22 sind durch zwei weitere, parallele, vertikale Fussflächen verbunden. Der Fuss kann zylindrisch, rund, kugelig, ballig oder prismatisch sein.
Der Raum für den Fuss 20 ist seitlich durch die einander gegenüberstehenden Tragflächen 222 und gemäss Fig. 3A und Fig. 3D durch einander gegenüberstehende Seitenplatten 224 begrenzt, welche zwischen den Tragflächen 222 angeordnet sind. Die geneigten Fussflächen 22 liegen an den Tragflächen 222 an, und eine der vertikalen Fussflächen liegt an einer Seitenplatte 224 an, solange, als der Fuss 20 in der Fussaufnahme 220 aufgenommen ist.

Durch die geneigte Anordnung der Tragflächen 222 wird das Einsenken des Fusses 20 in die Fussaufnahme 220 erleichtert, so dass die Tragflächen 222 hierbei eine zentrierende Wirkung ausüben.

Die Fig. 3A bis 3D zeigen Einzelheiten der Fussaufnahme 220 des Hubsystems 20/220. Insbesondere zeigen die Fig. 3B und 3C zwei Keilkörper 232, die bezüglich einer Vertikalmittelebene symmetrisch angeordnet sind. Jeder der Keilkörper 232 weist als obere Begrenzungsfläche eine Keilfläche 230 auf. An den Tragflächen 222 kommen die komplementär geformten bzw. rund, ballig oder bombiert bzw. tonnig geformten und angeordneten Fussflächen 22 des Fusses 20 zur Anlage. Die Tragflächen 222 schliessen den Winkel W1 ein. Dieser Winkel W1 kann auch von den Fussflächen 22 umschlossen werden. Die Keilkörper 232 sind symmetrisch zu einer Horizontalebene ausgebildet und angeordnet. Sie weisen eine obere Begrenzungsfläche bzw. Keilfläche 230 auf, und sie weisen eine untere Begrenzungsfläche 242 auf. Die Keilkörper 232 liegen auf Gleitflächen 252 eines Grundelementes 250 auf. Die Gleitflächen 252 sind komplementär, das heisst mit dem gleichen Neigungswinkel zu einer Horizontalebene wie die unteren Begrenzungsflächen 242, angeordnet.

Eine Schraubenvorrichtung 260, bzw. im vorliegenden Fall eine einzige Zentralschraube, dient dazu, die Keilkörper 232 und damit die Keilflächen 230 horizontal zu verschieben. Hierbei behalten die Keilflächen 230 ihre symmetrische Anordnung relativ zur Vertikalmittelebene bei, so dass keine seitliche Verschiebung des Fusses 20 und damit der Fahrsystemstruktur 10 eintritt.

Beim Anziehen der Schraubenvorrichtung 260 nähern sich die Keilkörper 232 einander und die Keilfläche 230 gleitet aufwärts, wobei die nach unten zulaufenden Fussflächen 22 auf den Tragflächen 222 relativ zueinander eine ruhende oder keine Bewegung ausführt, bei welcher der Fuss 20 und somit die Fahrsystemstruktur 10 angehoben wird. Entsprechend führen auch die unteren Begrenzungsflächen 242 und die Gleitflächen 252 des Grundelementes 250 eine gleitende Relativbewegung durch. Beim Lockern der Schraubenvorrichtung 260 erfolgen die umgekehrten Gleitbewegungen, das heisst die Keilkörper 232 entfernen sich voneinander und der Fuss 20 senkt sich nach unten ab.

Zugfedern 270 sind seitlich angeordnet und dienen dazu, eine gleichmässige Vorspannung der Anordnung mit den Keilkörpern 232 zu erzeugen. Ausserdem erleichtern die Zugfedern 270 das Abwärtsgleiten der Keilkörper 232 am Grundelement 250.

Beide Keilflächen 230 sind aus einem besonders gleitfreundlichen Material herzustellen, wobei sich als geeignetes Material für die Keilkörper 232 zum Beispiel Messing oder Bronze oder andere, beschichtete Materialien mit ähnlichen Eigenschaften erwiesen haben.

Die aneinander gleitenden Flächen müssen üblicherweise mit einem geeigneten Schmiermittel wie Schmierfett oder Schmieröl geschmiert werden.

Der Fahrsystemaufnehmer 200 nach der Erfindung ist in den Fig. 2A bis 2B dargestellt.

Die Fig. 4A und Fig. 4B zeigen ein Zwischenprodukt 300 nach der Erfindung, mit einem Fahrsystemaufnehmer und einer Fahrsystemstruktur.

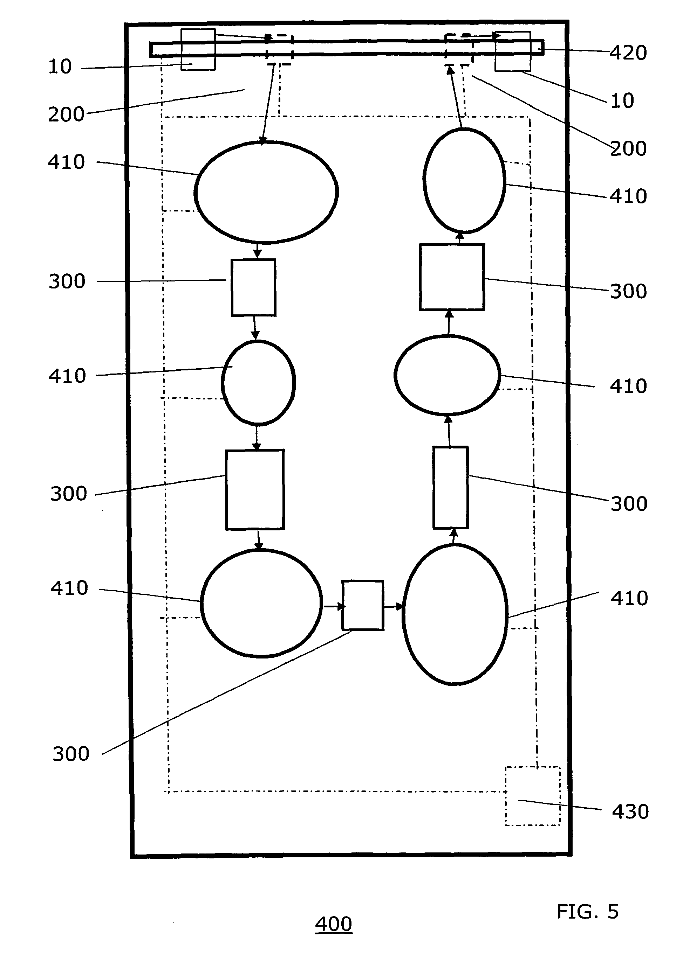

Fig. 5 zeigt einen Montagestandort 400 nach der Erfindung, wobei aus dieser Fig. 5 auch des Verfahren nach der Erfindung ersichtlich ist. Der Montagestandort 400 ist während einer Transferphase dargestellt. Der Montagestandort 400 umfasst mehrere Montagestationen 410, die dazu ausgelegt sind, stationsspezifische unterschiedliche Montageschritte durchzuführen, wobei jeder Montageschritt Teilschritte umfassen kann. Zur Montagestation 410 gehören ebenfalls eine Vielzahl von Fahrsystemaufnehmern 200 und ein Steuersystem 430, das die Vorgänge in der Montagestation 400 vollständig oder teilweise automatisiert steuert. Ein Hebezeug 420, beispielsweise ein Portalkran oder Brückenkran, dient dazu, die Fahrsystemstrukturen 10 in die Fahrsystemaufnehmer 200 einzusenken und sie wieder aus den Fahrsystemaufnehmern zu entfernen. Weitere Hebezeuge sind nicht notwendig, so dass der Montagestandort keiner aufwändigen Gebäudestrukturen bedarf.

Ein erster Fahrsystemaufnehmer 200, in Fig. 5 links oben gezeigt, ist bereitgestellt, um eine Fahrsystemstruktur 10 aufzunehmen. Weitere Fahrsystemaufnehmer 200 haben bereits Fahrsystemstrukturen 10 aufgenommen und bilden mit diesen zusammen Zwischenprodukte 300. Die Zwischenprodukte 300 werden während der Transferphasen mittels der autonom beweglichen Fahrsystemaufnehmer 200 in Richtung der Pfeile den einzelnen Montagestationen 410 zugeführt bzw. aus diesen wegbewegt. Die Zwischenprodukte 300 können sowohl in ihrer Längsrichtung wie auch quer dazu, wie zwischen den in Fig. 5 unten gezeigten Montagestationen, transferiert werden. Während der Montagephasen befinden sich die Zwischenprodukte 300 stationär in den Montagestationen 410. Nach Beendigung der kompletten Montage wird aus dem jeweils fertig bearbeitete Zwischenprodukt 300 die Fahrsystemstruktur 200 entfernt, was mit Hilfe des schon erwähnten Hebezeuges geschehen kann, wie es in Fig. 5 oben rechts dargestellt ist. Das Steuersystem 430, symbolisch dargestellt mit strichpunktierten Linien, dient dazu, den gesamten Ablauf der kompletten Montage zu steuern. Das Steuersystem 430 kann auch nur Teile des Montagestandortes, zum Beispiel eine oder mehrere bzw. nicht alle Montagestationen, einbeziehen.

## Patentansprüche

1. Hubsystem (20/220) für eine Vertikaljustierung einer Fahrsystemstruktur (10), welches Hubsystem (20/220) eine vertikal verschiebbare Tragfläche (222) aufweist, auf der die Fahrsystemstruktur (10) anlegbar ist, **dadurch gekennzeichnet, dass** bei einer Montage der Fahrsystemstruktur (10) diese mit einem nach unten weisenden Fuss bzw. Pösitionierstück (20) versehen ist, dass die Tragfläche (222) als Fußaufnahme (220) dient, dass der Fuss (20) mindestens eine Fussfläche bzw. Positionierstückfläche (22) aufweist, dass die Fußaufnahme (220) zwei Tragflächen (222)aufweist und dass die beiden Tragflächen (222) der Fussaufnahme (220) spiegelsymmetrisch zu einer Vertikalmittelebene angeordnet und relativ zu dieser Vertikalmittelebene vertikal verschiebbar sind, wobei die Tragflächen (222) komplementär zu den Fussflächen (22) ausgebildet sind und diese an den Tragflächen (222) anliegen.

2. Hubsystem (20/220) nach Patentanspruch 1, **dadurch gekennzeichnet, dass** die Fussaufnahme (220) mindestens ein Keilelement (232) aufweist, welches eine untere Begrenzungsfläche (242) aufweist, mit der es auf einer Gleitfläche (252) eines Grundelementes (250) verschiebbar abgestützt ist.

3. Hubsystem (20/220) nach Patentanspruch 2, **dadurch gekennzeichnet, dass** das Keilkörper eine obere Begrenzungsfläche bzw. Keilfläche (230) aufweist, die unter einem Keilwinkel zu einer Horizontalebene angeordnet ist, derart, dass die obere Begrenzungsfläche (230) und die untere Begrenzungsfläche (242) des Keilkörpers (232) spiegelsymmetrisch zu der Horizontalebene angeordnet sind.

4. Hubsystem (20/220) nach einem der vorangehenden Patentansprüche, **dadurch gekennzeichnet, dass** sie eine Schraubenanordnung (260) aufweist, mittels welcher die Keilfläche (230) horizontal verschiebbar ist.

5. Hubsystem (20/220) nach Patentanspruch 4, **dadurch gekennzeichnet, dass** die Schraubenanordnung (260) eine Zentralschraube aufweist, die mittels eines Schlüssels oder eines elektrisch oder hydraulisch oder per Pressluft betätigbaren Schlüssels betätigbar ist.

6. Hubsystem (20/220) nach einem der vorangehenden Patentansprüche, **dadurch gekennzeichnet, dass** es eine Federanordnung (270) aufweist, mittels welcher die Tragflächen (222) der Fussaufnahme (220) in vertikaler Richtung vorgespannt sind.

7. Hubsystem (20/220) nach einem der vorangehenden Patentansprüche, **dadurch gekennzeichnet, dass** die Fussaufnahme (220) zwei einander gegenüberliegende Seitenplatten (224) besitzt, die zusammen mit den Tragflächen (222) einen Raum für den Fuss (20) begrenzen.

8. Hubsystem (20/220) nach einem der vorangehenden Patentansprüche, **dadurch gekennzeichnet, dass** der Fuss (20) so ausgebildet und angeordnet ist, dass er von einer Fussaufnahme (220) einer Aufnahmeeinheit eines Fahrsystemaufnehmers (200) aufnehmbar ist, um als Transportfuss zu dienen.

9. Hubsystem (20/220) nach einem der vorangehenden Patentansprüche, **dadurch gekennzeichnet, dass** es, vorzugsweise ein, zwei oder drei, weitere Füsse (20) und Fussaufnahmen (220) besitzt.

10. Verwendung des Hubsystems nach einem der Ansprüche 1-9 zum Montieren und/oder Fertigungsmontieren von Fahrsystemen, wobei aus je einer Fahrsystemstruktur (10) eines Fahrsystems und einem Fahrsystemaufnehmer (200) mit mindestens einem Hubsystem (20/220) ein Zwischenprodukt (300) gebildet wird, die Zwischenprodukte (300) aufeinanderfolgend, getaktet und gleichzeitig, einen Montagestandort (400) durchlaufen, wobei während den Transferphasen jedes der Zwischenprodukte (300) zwischen je einer der Montagestationen (410) und der darauffolgenden Montagestation (410) transferiert wird, und während den Montagephasen in der jeweiligen Montagestationen (410) ein stationsspezifischer Montageschritt an den Fahrsystemstrukturen (10) der Zwischenprodukte (300) durchgeführt wird, und wobei vorzugsweise ein Steuersystem (430) des Montagestandortes (400) die Montagephasen und/oder die Transferphasen zeitlich jeweils mindestens annähernd gleich hält und den Transfer der Zwischenprodukte (300) steuert.

## Claims

1. Lifting system (20/220) for vertical adjustment of a transportation system structure (10), which lifting system (20/220) has a vertically displaceable supporting surface (222) on which the transportation system structure (10) can be laid,
**characterized in that**
during assembly of the transportation system structure (10) the latter is provided with a downwardly pointing foot or positioning piece (20), **in that** the supporting surface (222) serves as foot receptacle (220), **in that** the foot (20) has at least one foot surface or positioning piece surface (22), **in that** the foot cradle (220) has two supporting surfaces (222), and **in that** the two supporting surfaces (222) of the foot cradle (220) are arranged mirror-symmetrical to a vertical central plane and are vertically displaceable relative to this vertical central plane, the supporting surfaces (222) being embodied complementary to the foot surfaces (22), and the latter resting against the supporting surfaces (222) .

2. Lifting system (20/220) according to Claim 1,
**characterized in that**
the foot cradle (220) has at least one wedge element (232) which has a lower bounding surface (242) with which it is movably supported on a sliding surface (252) of a base element (250) .

3. Lifting system (20/220) according to Claim 3,
**characterized in that**
the wedge body has an upper bounding surface or wedge surface (230) which is arranged at a wedge angle to a horizontal plane in such manner that the upper bounding surface (230) and the lower bounding surface (242) of the wedge body (232) are arranged mirror-symmetrical to the horizontal plane.

4. Lifting system (20/220) according to one of the foregoing claims,
**characterized in that**
it has a screw arrangement (260) by means of which the wedge surface (230) is horizontally movable.

5. Lifting system (20/220) according to Claim 4,
**characterized in that**
the screw arrangement (260) has a central screw which is actuatable by means of a wrench, or by means of an electrically or hydraulically or pneumatically actuatable wrench.

6. Lifting system (20/220) according to one of the foregoing claims,
**characterized in that**
it has a spring arrangement (270) by means of which the supporting surfaces (222) of the foot cradle (220) are pretensioned in the vertical direction.

7. Lifting system (20/220) according to one of the foregoing claims,
**characterized in that**
the foot cradle (220) has two side plates (224) lying opposite to each other, which together with the supporting surfaces (222) bound a space for the foot (20) .

8. Lifting system (20/220) according to one of the foregoing claims,
**characterized in that**
the foot (20) is so formed and arranged that it can be cradled by a foot cradle (220) of a cradle unit of a transportation system cradle (200) so as to serve as transport foot.

9. Lifting system (20/220) according to one of the foregoing claims,
**characterized in that**
it has preferably one, two, or three further feet (20) and foot cradles (220) .

10. Use of the lifting system according to one of claims 1-9 for the assembly and/or manufacturing assembly of transportation systems, in which, from one transportation system structure (10) of a transportation system and one transportation system cradle (200) with at least one lifting system (20/220) respectively an intermediate product (300) is formed, the intermediate products (300) pass sequentially, rhythmically, and simultaneously through an assembly plant (400), during the transfer phases each of the intermediate products (300) is transferred between one of the assembly stations (410) and the respective subsequent assembly station (410), and during the assembly phases in the respective assembly stations (410) a station-specific assembly step is executed on the transportation system structures (10) of the intermediate products (300), and preferably a control system (430) of the assembly plant (400) maintains the respective assembly phases and/or transfer phases at least approximately equal with respect to time, and controls the transfer of the intermediate products (300).

## Revendications

1. Dispositif de levage (20/220) pour un ajustement vertical d'une structure de système de transport (10), lequel système de levage (20/220) présente une surface porteuse (222) mobile verticalement sur laquelle ladite structure (10) peut être posée, **caractérisé en ce que** lors d'un montage de la structure de système de transport (10), celle-ci est pourvue d'un pied ou d'un élément de positionnement (20) dirigé vers le bas, **en ce que** la surface porteuse (222) sert d'élément de réception de pied (220), **en ce que** le pied (20) présente au moins une surface de pied ou surface d'élément de positionnement (22), **en ce que** l'élément de réception de pied (220) présente deux surfaces porteuses (222) et **en ce que** les deux surfaces porteuses (222) de l'élément de réception de pied (220) sont disposées en miroir par rapport à un plan vertical médian et sont mobiles verticalement par rapport à ce plan vertical médian, les surfaces porteuses (222) ayant une forme complémentaire par rapport aux surfaces de pied (22) et celles-ci étant appliquées contre les surfaces porteuses (222) .

2. Système de levage (20/220) selon la revendication 1, **caractérisé en ce que** l'élément de réception de pied (220) présente au moins un élément formant coin (232) qui présente une surface de délimitation inférieure (242) avec laquelle il est en appui, mobile, sur une surface de coulissement (252) d'un élément de base (250).

3. Système de levage (20/220) selon la revendication 2, **caractérisé en ce que** le corps formant coin présente une surface de délimitation ou surface de coin supérieure (230) qui est disposée suivant un angle de coin par rapport à un plan horizontal, de telle sorte que la surface de délimitation supérieure (230) et la surface de délimitation inférieure (242) du corps de coin (232) sont disposées en miroir par rapport au plan horizontal.

4. Système de levage (20/220) selon l'une des revendications précédentes, **caractérisé en ce qu'**il présente un dispositif à vis (260) à l'aide duquel la surface de coin (230) est mobile horizontalement.

5. Système de levage (20/220) selon la revendication 4, **caractérisé en ce que** le dispositif à vis (260) présente une vis centrale qui est apte à être actionnée à l'aide d'une clé ou d'une clé à commande électrique ou hydraulique ou à air comprimé.

6. Système de levage (20/220) selon l'une des revendications précédentes, **caractérisé en ce qu'**il présente un dispositif à ressort (270) à l'aide duquel les surfaces porteuses (222) de l'élément de réception de pied (220) sont contraintes dans le sens vertical.

7. Système de levage (20/220) selon l'une des revendications précédentes, **caractérisé en ce que** l'élément de réception de pied (220) a deux plaques latérales (224) opposées qui, avec les surfaces porteuses (222), délimitent un espace pour le pied (20).

8. Système de levage (20/220) selon l'une des revendications précédentes, **caractérisé en ce que** le pied (20) est conçu et disposé de manière à pouvoir être reçu par un élément de réception (220) d'une unité de réception d'un dispositif de réception de système de transport (200) pour servir de pied de transport.

9. Système de levage (20/220) selon l'une des revendications précédentes, **caractérisé en ce qu'**il a de préférence un, deux ou trois pieds (20) et éléments de réception (220) supplémentaires.

10. Utilisation du système de levage selon l'une des revendications 1 à 9 pour le montage et/ou le montage de production de systèmes de transport, selon lequel on forme à partir d'une structure (10) d'un système de transport et d'un dispositif de réception de système de transport (200), à l'aide d'au moins un système de levage (20/220), un produit intermédiaire (300), les produits intermédiaires (300) traversent un site de montage (400) les uns à la suite des autres, de manière synchronisée et en même temps, étant précisé que pendant les phases de transfert chacun des produits intermédiaires (300) est transféré entre une station de montage (410) et la suivante, et que pendant les phases de montage dans la station de montage correspondante (410) une phase de montage propre à la station est réalisée sur les structures de système de transport (10) des produits intermédiaires (300), et de préférence un système de commande (430) du site de montage (400) maintient au moins approximativement constantes dans le temps les phases de montage et/ou les phases de transfert et commande le transfert des produits intermédiaires (300).
